# EUROPÄISCHE PATENTSCHRIFT

(11) **EP 0 733 495 B1**
(45) Veröffentlichungstag und Bekanntmachung des Hinweises auf die Patenterteilung: **12.07.2000**
(21) Anmeldenummer: 96102900.6
(22) Anmeldetag: 27.02.1996
(51) Int. Cl.: B60B 33/02

(54) **Lenkrolle für verfahrbare Arbeitsbühnen, Gerüste od. dgl.**
Castor for mobile working-platforms, scaffolds or similar
Roulette à pivot pour plates-formes de travail mobiles, échafaudages ou similaire

(30) Priorität: 23.03.1995 DE 19510011
(43) Veröffentlichungstag der Anmeldung: 25.09.1996
(73) Patentinhaber: Wicke GmbH + Co. KG, 45549 Sprockhövel (DE)
(72) Erfinder: Hellwig, Martin, 45549 Sprockhövel (DE)
(74) Vertreter: Mentzel, Norbert, Dipl.-Phys.

(56) Entgegenhaltungen:
- EP-A- 0 413 197
- EP-A- 0 666 189
- DE-A- 2 441 676
- DE-A- 3 426 443
- DE-A- 4 128 729
- DE-U- 29 516 054
- FR-A- 2 291 876
- GB-A- 2 200 042

## Beschreibung

Die Erfindung betrifft eine Lenkrolle für verfahrbare Arbeitsbühnen, Gerüste od.dgl., mit einem vertikal aufragenden Befestigungselement, einer gegenüber diesem um seine Vertikalachse schwenkbeweglichen, an einer Lagerschale des Befestigungselements abgestützten Radgabel und einem daran gehalterten, um eine horizontale Achse drehbaren Laufrad, wobei die das Laufrad lagernde Achse horizontale Schlitze der Radgabel durchgreift und in einen schwenkbar angeordneten Fußschalthebel eingreift, durch den die Achse mit dem Laufrad in den Schlitzen verschiebbar in eine einen Nachlauf aufweisende Fahrstellung einerseits und in eine Feststellage andererseits überführbar ist, wobei in Feststellage das Laufrad an eine an der Radgabel beweglich angeordnete Bremslasche andrückbar ist, die einen Kraftschluß einerseits mit der Lauffläche des Laufrades und andererseits mit der Lagerschale des Befestigungselementes unmittelbar oder mittelbar herstellt.

Bei einer aus der EP-A-0 413 197 bekannten Lenkrolle der eingangs genannten Art ist der Fußschalthebel schwenkbeweglich an der Radgabel gelagert und weist in jedem Hebelschenkel einen S-förmig gekrümmten Führungsschlitz auf, mit dem die Laufradachse umgriffen ist. Beim Verschwenken des Fußschalthebels gleiten die Führungsschlitze an der Laufradachse ab und zwingen diese in eine Florizontalbewegung in den horizontalen Schlitzen der Radgabel. Beim Niederdrücken des Fußschalthebels wird das Laufrad über die Laufradachse in eine den Nachlauf der Laufradmitte gegenüber der Schwenkachse aufhebende Feststellage überführt, in der eine etwa vertikal in Schlitzen der Radgabel verschiebbare Bremslasche über den Laufradumfang an die undrehbare Lagerschale eines Befestigungszapfens angepreßt wird, um sowohl die Drehbewegung des Laufrades als auch die Schwenkbewegung der Radgabel zu unterbinden. Zur Überführung des Laufrades in seine Fahrstellung ist der Fußschalthebel anzuheben, wozu dessen Trittplatte mit der Schuhspitze zu untergreifen ist. Um jedoch das Laufrad sowohl in seine Fahrstellung als auch in seine Feststellage durch Niedertreten des Fußschalthebels zu bewerkstelligen, wurde bereits vorgeschlagen, diesen Fußschalthebel doppelarmig auszubilden, indem der Fußschalthebel mit einem zweiten Betätigungsarm ausgestattet ist so daß der Fußschalthebel das Laufrad auf beiden Seiten überragt. Zur Erzeugung der Feststellage des Laufrades ist die eine Seite des Fußschalthebels niederzudrücken, während zur Lösung des Laufrades und dessen Überführung in die Fahrstellung die andere Seite des Fußschalthebels niederzudrücken ist. Diese Lösung ist jedoch insofern ungünstig, als daß das Laufrad in eine solche Lage zu verschwenken ist, daß sowohl die eine als auch die andere Seite des Fußschalthebels betätigbar ist.

Um diesem Übelstand abzuhelfen, wurde bereits gemäß der DE-A-41 28 729 vorgeschlagen, dem Fußschalthebel einen Lösehebel beizuordnen, dessen Betätigungsarm auf der gleichen Laufradseite wie der Betätigungsarm des Fußschalthebels liegt. Diese Lösung ist jedoch aufgrund des Zahneingriffs zwischen Fußschalthebel und Lösehebel, insbesondere hinsichtlich ihrer Fertigung unwirtschaftlich. Beide vorgenannten Lösungen benutzen zur horizontalen Verschiebung der Laufradachse im Horizontalschlitz S-förmig gekrümmte Schlitze im Fußschalthebel. Dies führt aufgrund von Reibkräften in den Schlitzen einerseits zu schwergängiger Verstellung und andererseits zu erhöhten Verschleißerscheinungen insbesondere in den S-förmigen Schlitzen.

Aufgabe der Erfindung ist es, eine Lenkrolle der eingangs genannten Art dahingehend zu verbessern, daß unter Beibehaltung einer Horizontalverschiebung des Laufrades in der Radgabel ohne Hubbewegung während der Verstellbewegung sowohl die Reibkräfte vermindert werden als auch die Verschiebung des Laufrades in der Radgabel von nur einer Seite der Lenkrolle her ermöglicht wird. Diese Aufgabe ist erfindungsgemäß dadurch gelöst, daß der die Laufradachse horizontal verschiebende Fußschalthebel an der Laufradachse schwenkbar angelenkt und drehgelenkig mit einem fußbetätigbaren Bremshebel verbunden ist, der seinerseits an der Radgabel derart angelenkt ist, daß die Gelenkstellen von Fußschalthebel und Bremshebel einen Kniehebel bilden, dessen mittlere Gelenkstelle bei Feststellage des Laufrades in eine Übertotpunktlage überführt ist. Abgesehen davon, daß auf die Laufradachse nur noch Gleitreibung im Horizontalschlitz einwirkt, ist durch die Kniehebelausbildung in Feststellage des Laufrades durch die Erzeugung einer Übertotpunktlage eine sichere Halterung des Laufrades in seiner Feststellage gewährleistet. Dabei bleibt jedoch der Vorteil erhalten, daß die Belastung der Lenkrolle aus dem Gewicht der Arbeitsbühne bzw. des Gerüstes in Feststellage unmittelbar über das Befestigungselement, dessen Lagerschale, die Bremslasche und das Laufrad in den Boden eingeleitet wird, ohne die Lager- und Gelenkstellen der Radgabel und der Hebel zu belasten.

Zur Erzeugung einer kompakten Bauweise ist der die Lösebewegung einleitende Fußschalthebel gabelartig gestaltet und sowohl zwischen den Schenkeln der Radgabel als auch zwischen den Schenkeln des ebenfalls gabelartig gestalteten Bremshebels angeordnet, wobei der Bremshebel seinerseits ebenfalls zwischen den Schenkeln der Radgabel angeordnet ist und Fußschalthebel und Bremshebel das Laufrad seitlich umgreifen. Um den als Lösehebel fungierenden Fußschalthebel während der Feststellage am Bremshebel abzustützen, weisen die Schenkel des Bremshebels vorzugsweise jeweils einen in die Ebene des benachbarten Schenkels des Fußschalthebels abgekröpften Stützansatz auf.

Eine Sicherung der Lage von Bremshebel und Fußschalthebel zur Aufrechterhaltung der Fahrstellung läßt sich vorteilhaft dadurch erzielen, daß wenigstens zwischen einem Schenkel des Bremshebels und dem benachbarten Schenkel der Radgabel eine die Fahrstellung sichernde Raste angeordnet ist Dabei mag die Raste vorteilhaft durch eine im einen Schenkel angeordnete Beule und eine im anderen Schenkel angeordnete Ausnehmung gebildet sein, in welche die Beule in der Rastlage eingreift.

Zur wirtschaftlichen Erstellung der Gelenkverbindungen sind die Gelenkstellen zwischen den Schenkeln von Fußschalthebel und Bremshebel sowie zwischen Bremshebel und Radgabel vorteilhaft durch in Schenkelbohrungen eingesetzte Hohlniete gebildet

Die Erfindung ist in einem Ausführungsbeispiel auf der Zeichnung dargestellt und wird nachfolgend näher erläutert Es zeigen
- Fig 1: die Lenkrolle in einer Seitenansicht im Schnitt durch ihre Mittelebene, bei der das Laufrad entfernt ist und lediglich dessen Uiiifang in strichpunktierter Linie dargestellt ist,
- Fig. 2: die aus Fig 1 ersichtliche Lenkrolle in einer halben Stirnansicht, bei ebenfalls weggelassenem Laufrad,
- Fig 3: die aus Fig 1 ersichtliche Lenkrolle in einer Draufsicht im Schnitt nach der Linie III - III von Fig 1,
- Fig. 4: die aus Fig. 1 ersichtliche Lenkrolle in analoger Schnittdarstellung, bei welcher jedoch das Laufrad sich in seiner Feststellage befindet,
- Fig 5: die Raste zwischen Bremshebel und Radgabel in einem Schnitt nach der Linie V - V von Fig. 1.

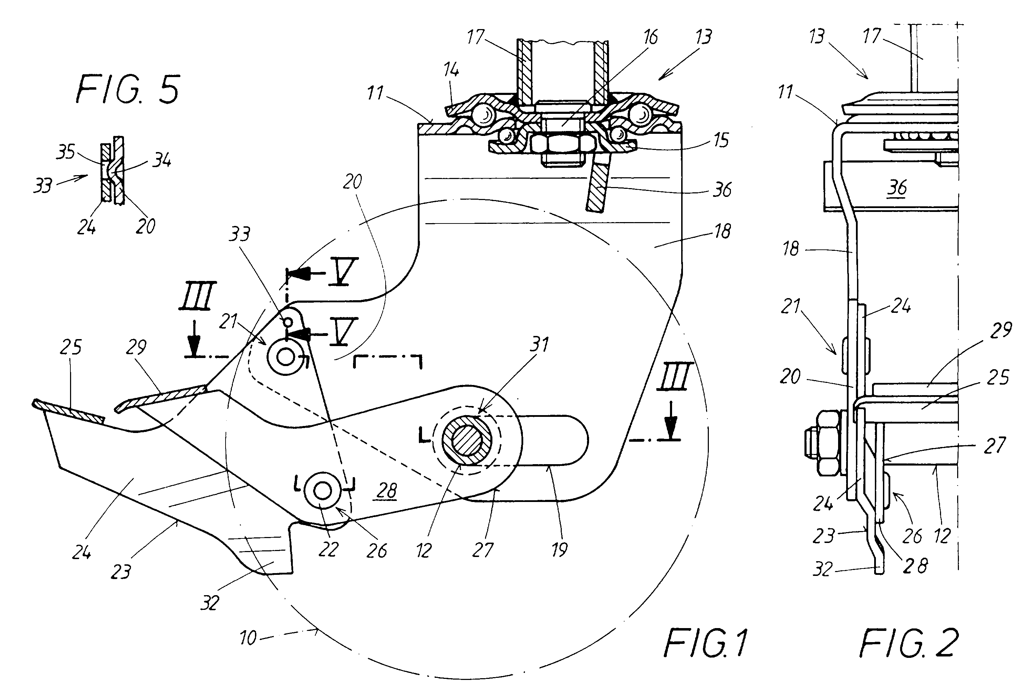

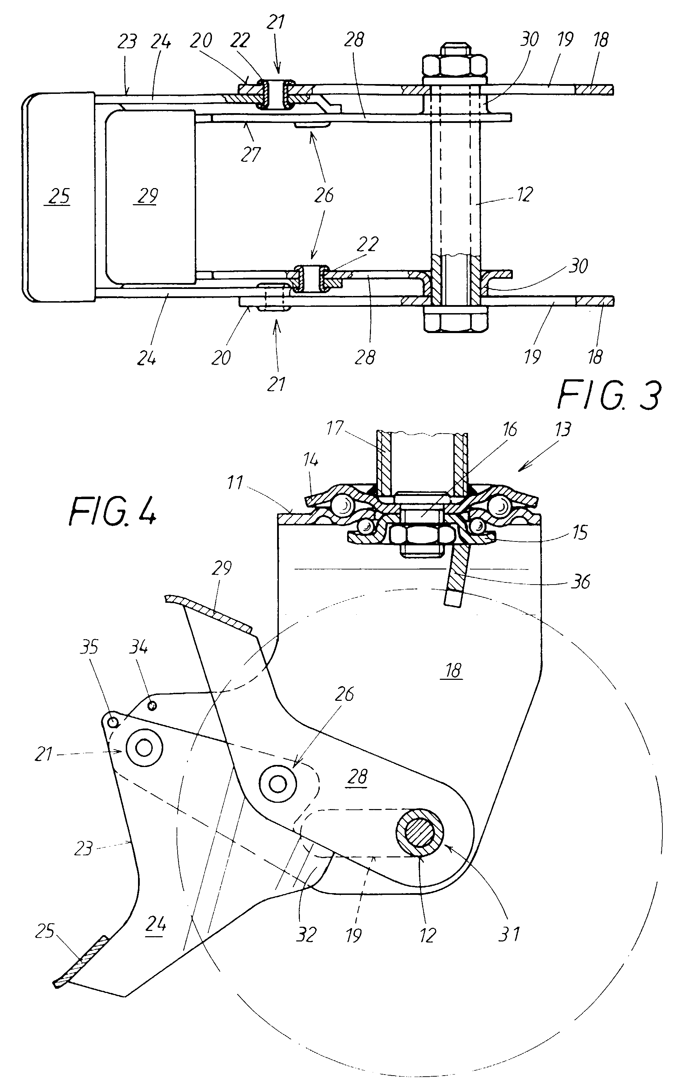

Zunächst sei darauf hingewiesen, daß in den Zeichnungen nur diejenigen Teile der Lenkrolle dargestellt sind, die für das Verständnis der Erfindung von Bedeutung sind. So fehlen insbesondere Einzelheiten über die mittels einer solchen Lenkrolle verfahrbaren Gegenstände, wie Arbeitsbühnen, Gerüste od.dgl., und es fehlen auch spezielle Ausgestaltungen der Befestigungselemente, die andersartig als das dargestellte Befestigungselement ausgebildet und an den jeweiligen Bedarfsfall angepaßt sein können. Im übrigen gilt, daß alle in den Zeichnungen fehlenden Bauteile der Lenkrolle oder der mit dieser zusammenwirkenden Geräte einen an sich bekannten Aufbau haben können, und daß in den Fig. 1 und 4 die übliche Einbaulage der Lenkrolle in bezug auf ihre Verfahrbarkeit am Boden dargestellt ist

Die Lenkrolle weist ein Laufrad 10 bekannter Ausbildung auf, das von einer Radgabel 11 1 aufgenommen wird Das Laufrad 10 ist auf einer Laufradachse 12 drehbar angeordnet, wobei es sich bei der Laufradachse um eine Kopfschraube handeln kann, die zusammen mit einer Mutter das Laufrad 10 an der Radgabel 11 befestigt, wobei der Schraubenschaft von einer Hülse zur Lagerung des Laufrades 10 ummantelt sein kann.

Der Gabelrücken der Radgabel 11 ist integrierter Bestandteil eines eine senkrechte Mittelachse aufweisenden Schwenklagers 13 Dieses Schwenklager umfaßt eine den Gabelrücken übergreifende Außenschale 14 und eine in die Radgabelhöhlung eingreifende Lagerschale 15. Zwischen der Außenschale 14 und dem Gabelrücken einerseits und der Lagerschale 15 und dem Gabelrücken andererseits befinden sich wälzlagerbildende Kugelkränze. An die mit der Lagerschale 15, beispielsweise über eine Schraube 16, fest verbundene Außenschale 14 schließt sich ein als Befestigungselement 17 dienender Zapfen an, der beispielsweise mit der Außenschale 14 verschweißt sein kann Dieses Befestigungselement dient der Anbringung der Lenkrolle an einem Gerät, wie beispielsweise einer Arbeitsbühne, einem Gerüst od. dgl. in bekannter, und daher nicht dargestellter Weise.

Die Radgabel 11 ist in ihrem Querschnitt im wesentlichen als U-förmiger Körper ausgebildet, dessen beide Schenkel 18 in den quer dazu verlaufenden Gabelrücken übergehen. In jedem der beiden Schenkel 18 ist ein horizontal verlaufender Schlitz 19 angeordnet, wobei die beiden Schlitze 19 die Laufradachse 12 verschiebbar aufnehmen. Auf gleicher Seite der Schenkel 18 ist an diesen ein Vorsprung 20 angeformt, wobei jeder Vorsprung 20 eine durch einen Hohlniet 22 gebildete Gelenkstelle 21 aufweist, die der drehgelenkigen Verbindung eines Bremshebels 23 mit der Radgabel 11 dient. Dieser Bremshebel 23 besteht aus zwei im Abstand zueinander angeordneten Schenkeln 24, die mit ihren Außenseiten an den Innenseiten der Gabelschenkel 18 anliegen. Die Schenkel 24 des Bremshebels 23 sind durch eine Trittplatte 25 brückenartig miteinander verbunden Der um die Gelenkstelle 21 schwenkbare Bremshebel 23 weist im Abstand zur Gelenkstelle 21 in seinen Schenkeln 24 eine weitere Gelenkstelle 26 auf, die ebenfalls durch Hohlniete gebildet sein kann, und durch welche mit dem Bremshebel 23 ein als Lösehebel fungierender Fußschalthebel 27 über seine Schenkel 28 drehgelenkig verbunden ist. Auch die Schenkel 28 des Fußschalthebels 27 sind über eine Trittplatte 29 miteinander verbunden, wobei die sich über die Gelenkstelle 26 hinaus erstreckenden Enden der auf den Innenseiten der Schenkel 24 des Bremshebels 23 angeordneten Schenkel 28 des Fußschalthebels 27 jeweils einen nach außen gerichteten Kragenzug 30 aufweisen, mit welchem die Laufradachse 12 umfaßt ist, so daß auch die Mitte der Laufradachse 12 eine Gelenkstelle 31 für das Hebelsystem bildet.

An der Unterseite jeden Schenkels 24 des Bremshebels 23 ist ein Stützansatz 32 angeordnet, der jeweils in die Ebene eines Schenkels 28 des Fußschalthebels 27 abgekröpft ist.

Oberhalb der Gelenkstelle 21 ist auf wenigstens einer Seite zwischen dem Schenkel 24 des Bremshebels 23 und dem Vorsprung 20 eines Schenkels 18 eine Rast 33 vorgesehen. Diese Raste 33 kann zweckmäßigerweise - wie aus Fig. 5 ersichtlich - aus einer in den Vorsprung 20 des Schenkels 18 der Radgabel 11 nach innen vorspringenden Beule 34 und aus einer im Schenkel 24 des Bremshebels 23 angeordneten Ausnehmung 35 gebildet sein.

Ausgehend von der aus Fig. 1 ersichtlichen Fahrstellung der Lenkrolle, bei der sowohl die Schwenkbewegung der Radgabel als auch die Drehbewegung des Laufrades ungehemmt möglich ist, wird durch Niederdrücken des Bremshebels 23 dieser um die an der Radgabel 11 ortsfeste Gelenkstelle 21 entgegen dem Uhrzeigersinn verschwenkt, wobei auch die den Bremshebel 23 dem Fußschalthebel 27 verbindende Gelenkstelle 26 entgegen dem Uhrzeigersinn verschwenkt, wodurch die durch die Laufradachse 12 gebildete Gelenkstelle 31 in dem als Schlitz ausgebildeten, horizontal verlaufenden Langloch 19 nach rechts verschoben wird, bis die Laufradachse 12 zusammen mit dem Laufrad 10 senkrecht unter der vertikalen Achsmitte des zapfenförmigen Befestigungselementes 17 liegt. Während dieser Bewegungsphase der Hebelanordnung verschwenkt der Hebel 27 im Uhrzeigersinn um die Gelenkstelle 31 nach oben, bis schließlich die aus Fig. 4 ersichtliche Position erreicht ist. Dabei wird während der Bewegungsphase von dem Augenblick an, bei dem die Umfangsfläche des Laufrades 10 die in etwa vertikalen Längsschlitzen in den Schenkeln 18 der Radgabel 11 geführte Bremslasche 36 an deren Unterseite berührt, diese Bremslasche 36 nach oben geschoben, bis sie schließlich in der aus Fig. 4 ersichtlichen Lage zwischen der Lagerschale 15 und der Laufradoberfläche verklemmt ist. Dabei wird sowohl die Schwenkbewegung der Radgabel 11 als auch die Drehbewegung des Laufrades 10 durch Feststellung unterbunden. In dieser Feststellage befindet sich die Gelenkstelle 26 oberhalb der Verbindungslinie zwischen den Gelenkstellen 21 und 31, so daß die Gelenkstelle 26 eine Übertotpunktlage erreicht hat, wodurch die Feststellage gesichert ist.

Um die Fahrstellung des Laufrades im Bedarfsfall wieder herbeizuführen, läßt sich der hochgeschwenkte Fußschalthebel 27 als Lösehebel benutzen und durch Beaufschlagung seiner Trittplatte 29 entgegen dem Uhrzeigersinn nach unten drücken. Dadurch verschwenkt über die Gelenkstelle 26 der Bremshebel 23 im Uhrzeigersinn aus seiner unteren Stellung nach oben, während gleichzeitig die Gelenkstelle 31 nach links im horizontalen Schlitz 19 zurückgezogen wird Da der Mittelpunkt der Gelenkstelle 31 mit der Achsmitte der Laufradachse 12 übereinstimmt, erreicht die Laufradachse 12 zusammen mit dem Laufrad 10 die aus Fig. 1 ersichtliche Nachlauflage, durch welche die Fahrstellung gegeben ist. Die Lage der Hebelanordnung in der aus Fig. 1 ersichtlichen Fahrstellung läßt sich durch die Raste 33 sichern, indem die Beule 34 am Vorsprung 20 eines Radgabelschenkels in die Ausnehmung 35 im Schenkel 24 des Bremshebels 23 eingedrungen ist, so daß der Bremshebel 23 in der aus Fig. 1 ersichtlichen Lage gehalten wird.

Wie bereits erwähnt, gibt das vorbeschriebene Ausführungsbeispiel den Erfindungsgegenstand nur beispielsweise wieder, der keinesfalls allein darauf beschränkt ist. Es sind vielmehr noch mancherlei Änderungen und andere Ausgestaltungen des Erfindungsgegenstandes denkbar.

### Bezugszeichenliste:

- 10: Laufrad
- 11: Radgabel
- 12: Achse
- 13: Schwenklager
- 14: Außenschale
- 15: Lagerschale
- 16: Schraube
- 17: Befestigungselement / Zapfen
- 18: Schenkel, von 11
- 19: Schlitz
- 20: Vorsprung
- 21: Gelenkstelle
- 22: Hohlniet
- 23: Bremshebel
- 24: Schenkel, von 23
- 25: Trittplatte, von 23
- 26: Gelenkstelle
- 27: Fußschalthebel
- 28: Schenkel, von 27
- 29: Trittplatte, von 27
- 30: Kragenzug
- 31: Gelenkstelle
- 32: Stützansatz
- 33: Raste
- 34: Beule
- 35: Ausnehmung
- 36: Bremslasche

## Patentansprüche

1. Lenkrolle für verfahrbare Arbeitsbühnen, Gerüste od.dgl. mit einem vertikal aufragenden Befestigungselement (17), einer gegenüber diesem um seine Vertikalachse schwenkbeweglichen, an einer Lagerschale (15) des Befestigungselementes (17) abgestützten Radgabel (11) und einem daran gehalterten, um eine horizontale Achse drehbaren Laufrad (10), wobei die das Laufrad (10) lagernde Achse (12) horizontale Schlitze (19) der Radgabel (11) durchgreift und in einen schwenkbar angeordneten Fußschalthebel (27) eingreift, durch den die Achse (12) mit dem Laufrad (10) in den Schlitzen (19) verschiebbar in eine einen Nachlauf aufweisende Fahrstellung einerseits und in eine Feststellage andererseits überführbar ist, wobei in Feststellage das Laufrad (10) an eine an der Radgabel (11) beweglich angeordnete Bremslasche (36) andrückbar ist, die einen Kraftschluß einerseits mit der Lauffläche des Laufrades (10) und andererseits mit der Lagerschale (15) des Befestigungselementes (17) unmittelbar oder mittelbar herstellt,
**dadurch gekennzeichnet,**
daß der die Laufradachse (12) horizontal verschiebende Fußschalthebel (27) an der Laufradachse (12) schwenkbar angelenkt und drehgelenkig mit einem fußbetätigbaren Bremshebel (23) verbunden ist, der seinerseits an der Radgabel (11) derart angelenkt ist, daß die Gelenkstellen (21, 26, 31) von Fußschalthebel (27) und Bremshebel (23) einen Kniehebel bilden, dessen mittlere Gelenkstelle (26) bei Feststellage des Laufrades (10) in eine Übertotpunktlage überführbar ist.

2. Lenkrolle nach Anspruch 1, dadurch gekennzeichnet, daß der die Lösebewegung einleitende Fußschalthebel (27) gabelartig geschaltet ist und sowohl zwischen den Schenkeln (18) der Radgabel (11) als auch zwischen den Schenkeln (24) des ebenfalls gabelartig gestalteten Bremshebels (23) angeordnet ist, wobei der Bremshebel (23) seinerseits ebenfalls zwischen den Schenkeln (18) der Radgabel (11) angeordnet ist, und Fußschalthebel (27) und Bremshebel (23) das Laufrad (10) umgreifen.

3. Lenkrolle nach Anspruch 1 oder 2, dadurch gekennzeichnet, daß die Schenkel (24) des Bremshebels (23) jeweils einen in die Ebene des benachbarten Schenkels (28) des Fußschalthebels (27) abgekröpften Stützansatz (32) aufweisen.

4. Lenkrolle nach einem der vorhergehenden Ansprüche, dadurch gekennzeichnet, daß wenigstens zwischen einem Schenkel (24) des Bremshebels (23) und dem benachbarten Schenkel (18) der Radgabel (11) eine die Fahrstellung sichernde Raste (33) angeordnet ist.

5. Lenkrolle nach Anspruch 4, dadurch gekennzeichnet, daß die Raste (33) durch eine im einen Schenkel (18) angeordnete Beule (34) und eine im anderen Schenkel (33) angeordnete Ausnehmung (35) gebildet ist, in welche die Beule (34) bei Rastlage eingreift.

6. Lenkrolle nach einem der vorhergehenden Ansprüche, dadurch gekennzeichnet, daß die Gelenkstellen (21, 26) zwischen den Schenkeln (18, 24, 28) von Fußschalthebel (27) und Bremshebel (23) sowie zwischen Bremshebel (23) und Radgabel (11) durch in Schenkelbohrungen eingesetzte Hohlniete (22) gebildet sind.

## Claims

1. Steering roller for travelling working platforms, scaffolds or the like, having a vertically upward projecting fastening element (17), a wheel fork (11) capable of swivelling relative to the latter about its vertical axis and supported on a bearing shell (15) of the fastening element (17), and a running wheel (10) mounted on the wheel fork and rotatable about a horizontal axis, wherein the axle (12) supporting the running wheel (10) extends through horizontal slots (19) of the wheel fork (11) and engages into a pivotally disposed shift pedal (27), by means of which the axle (12) with the running wheel (10) in the slots (19) is, on the one hand, displaceable into a driving position with a caster action and, on the other hand, transferable into a parked position, wherein in parked position the running wheel (10) is pressable against a braking bracket (36), which is disposed movably on the wheel fork (11) and directly or indirectly establishes a frictional connection, on the one hand, with the running surface of the running wheel (10) and, on the other hand, with the bearing shell (15) of the fastening element (17),
characterized in
that the shift pedal (27), which horizontally displaces the running wheel axle (12), is coupled pivotally to the running wheel axle (12) and hinge-connected to a brake pedal (23), which in turn is coupled to the wheel fork (11) in such a way that the hinge points (21, 26, 31) of shift pedal (27) and brake pedal (23) form a toggle lever, of which the middle hinge point (26) in parked position of the running wheel (10) is transferable into an upper dead centre position.

2. Steering roller according to claim 1, characterized in that the shift pedal (27) initiating the release movement is operated in the manner of a fork and disposed both between the limbs (18) of the wheel fork (11) and between the limbs (24) of the brake pedal (23), which is likewise designed in a fork-like manner, wherein the brake pedal (23) in turn is disposed likewise between the limbs (18) of the wheel fork (11), and shift pedal (27) and brake pedal (23) embrace the running wheel (10).

3. Steering roller according to claim 1 or 2,
characterized in that the limbs (24) of the brake pedal (23) each comprise a supporting projection (32), which is bent at right angles into the plane of the adjacent limb (28) of the shift pedal (27).

4. Steering roller according to one of the preceding claims, characterized in that disposed at least between one limb (24) of the brake pedal (23) and the adjacent limb (18) of the wheel fork (11) is a detent device (33), which secures the driving position.

5. Steering roller according to claim 4, characterized in that the detent device (33) is formed by a bulge (34) disposed in the one limb (18) and a recess (35), which is disposed in the other limb (33) and into which the bulge (34) engages in detent position.

6. Steering roller according to one of the preceding claims, characterized in that the hinge points (21, 26) between the limbs (18, 24, 28) of shift pedal (27) and brake pedal (23) as well as between brake pedal (23) and wheel fork (11) are formed by tubular rivets (22) inserted into limb bores.

## Revendications

1. Roulette orientable pour plates-formes de travail mobiles, échafaudages mobiles ou similaires, munie d'un élément de fixation (17) dressé verticalement, d'une fourche de roue (11) opposée à l'élément de fixation, mobile à pivotement autour de l'axe vertical de cet élément et en appui sur une coquille de palier (15) de l'élément de fixation (17), et d'un galet de roulement (10),maintenu sur la fourche de roue (11) et tournant autour d'un axe horizontal, roulette orientable dans laquelle l'axe (12) supportant à rotation le galet de roulement (10) traverse des rainures horizontales (19) de la fourche de roue et est engagé dans un levier (27) de commutation au pied, monté pivotant et par l'intermédiaire duquel l'axe (12) est susceptible de coulisser dans les rainures (19) avec le galet de roulement (10) pour venir, d'une part, dans une position de roulage exempte de blocage, et d'autre part, est susceptible d'être poussé dans une position de blocage ou d'immobilisation et dans laquelle, en position de blocage, le galet de roulement (10) est susceptible d'être pressé sur une patte de freinage (36) disposée mobile sur la fourche de roue (11) et qui établit directement ou indirectement une liaison à force d'une part avec la surface de roulement du galet de roulement (10) et d'autre part, avec la coquille de palier (15) de l'élément de fixation (17), caractérisée en ce que le levier (27) de commutation au pied déplaçant horizontalement l'axe (12) du galet de roulement, est monté pivotant sur l'axe (12) du galet de roulement et est relié en rotation par une articulation à un levier de frein (23) susceptible d'être actionné au pied et qui de son côté est articulé sur la fourche de roue (11) de telle façon que les zones d'articulation (21, 26, 31) du levier (27) de commutation au pied et du levier de frein (23) forment un levier à genouillère dont la zone médiane d'articulation (26) est susceptible d'être déplacée, pour la position de blocage ou d'immobilisation du galet de roulement (10), dans une position de dépassement de poids mort.

2. Roulette orientable selon la revendication 1, caractérisée en ce que le levier (27) de commutation au pied provoquant un déplacement de roulage libre est réalisé monté en fourche et est disposé à la fois entre les branches (18) de la fourche de roue (11) et entre les branches (24) du levier de frein (23) réalisé également en fourche, le levier de frein (23), de son côté, étant également disposé entre les branches (18) de la fourche de roue, et en ce que le levier (27) de commutation au pied et le levier de frein (23) entourent le galet de roulement (10).

3. Roulette orientable selon la revendication 1 ou 2, caractérisé en ce que les branches (24) du levier de frein (23) comportent chacune un prolongement d'appui (32) plié en décalage dans le plan de la branche voisine (28) du levier (27) de commutation au pied.

4. Roulette orientable selon l'une des revendications précédentes, caractérisée en ce qu'au moins entre une branche (24) du levier de frein (23) et la branche voisine (18) de la fourche de roue (11), est disposé un crantage d'arrêt (33) verrouillant la position de roulage.

5. Roulette orientable selon la revendication 4, caractérisée en ce que le crantage d'arrêt (33) est formé d'un bossage (34) disposé sur une branche (18), et d'un évidemment (35) disposé dans une autre branche (33) et dans lequel s'engage le bossage (34) en position de verrouillage.

6. Roulette orientable selon l'une des revendications précédentes, caractérisée en ce que les zones d'articulation (21, 26) entre les branches (18. 24, 28) du levier (27) de commutation au pied et du levier de frein (23), ainsi qu'entre le levier de frein (23) et la fourche de roue (11), sont réalisées par des rivets creux (22) insérés dans des alésages des branches.
